# EUROPEAN PATENT SPECIFICATION

(11) **EP 4 347 727 B1**
(45) Date of publication and mention of the grant of the patent: **02.07.2025**
(21) Application number: 22729271.1
(22) Date of filing: 26.05.2022
(51) Int. Cl.: C09D 11/101, C09D 11/38

(54) **PRINTING INK**
DRUCKFARBE
ENCRE D'IMPRESSION

(30) Priority: 27.05.2021 GB 202107577
(43) Date of publication of application: 10.04.2024
(73) Proprietor: Fujifilm Speciality Ink Systems Limited, Broadstairs, Kent CT10 2LE (GB)
(72) Inventor: CORFE, Lee, Industrial Estate Broadstairs Kent CT10 2LE (GB)
(74) Representative: Elkington and Fife LLP
(86) International application number: PCT/GB2022/051330
(87) International publication number: WO 2022/248860

(56) References cited:
- EP-A1- 3 222 684
- EP-A1- 3 241 874
- WO-A1-2010/133381
- WO-A1-2020/152037
- JP-A- 2019 151 714

## Description

The present invention relates to a printing ink and, in particular, to an inkjet ink which is suitable for food packaging applications.

In inkjet printing, minute droplets of black, white or coloured ink are ejected in a controlled manner from one or more reservoirs or printing heads through narrow nozzles on to a substrate, which is moving relative to the reservoirs. The ejected ink forms an image on the substrate.

For high-speed printing, the inks must flow rapidly from the printing heads, and, to ensure that this happens, they must have in use a low viscosity, typically 200 mPas or less at 25°C, although in most applications the viscosity should be 50 mPas or less, and often 25 mPas or less. Typically, when ejected through the nozzles, the ink has a viscosity of less than 25 mPas, preferably 5-15 mPas and most preferably between 7-11 mPas at the jetting temperature, which is often elevated to, but not limited to 40-50°C (the ink might have a much higher viscosity at ambient temperature). The inks must also be resistant to drying or crusting in the reservoirs or nozzles. For these reasons, inkjet inks for application at or near ambient temperatures are commonly formulated to contain a large proportion of a mobile liquid vehicle or solvent such as water or a low-boiling solvent or mixture of solvents.

Another type of inkjet ink contains unsaturated organic compounds, termed monomers and/or oligomers, which polymerise when cured. This type of ink has the advantage that it is not necessary to evaporate the liquid phase to dry the print; instead the print is cured, a process which is more rapid than evaporation of solvent at moderate temperatures.

Inkjet inks can be printed onto a variety of substrates. Particularly challenging substrates for inkjet printing thereon are substrates for food packaging.

Food packaging represents a particular challenge because of the strict safety limitations on the properties of materials that come into contact with food, including indirect additives like packaging inks. Accordingly, for printed food packaging, it is necessary to control and quantify the migration and/or odour of the components of the printed image on the food packaging into the food products. Specific exclusions based on their odour and/or migration properties include volatile organic solvents and many monomers typically used in curable inks. As suitable background prior arts EP 3241874 and WO 2020152037 might be cited.

It is also advantageous for an inkjet ink to have a high cure speed for food packaging applications, in particular for single pass printing onto food packaging. By cure speed is meant the speed at which the actinic radiation source moves relative to the substrate. An advantage of a high cure speed is that a low dose per unit area is required to achieve a fully cured film.

There are a number of sources of actinic radiation, which are commonly used to cure inkjet inks which contain radiation-curable material. The most common source of radiation is a UV source. UV sources include mercury discharge lamps, fluorescent tubes, light emitting diodes (LEDs), flash lamps and combinations thereof.

Mercury discharge lamps, fluorescent tubes and flash lamps are traditionally used as the radiation source as they have an impressive UV output performance. However, these radiation sources have several drawbacks in their operational characteristics, and LED UV light sources are an attractive alternative. In particular, when compared to, for example mercury discharge lamps (the most common UV light source used to cure inkjet inks), LEDs offer significant cost reduction, longer maintenance intervals, higher energy efficiency and are an environmentally friendlier solution. However, there are a number of challenges when utilising LED UV light sources as the radiation source.

When LEDs are used, it is necessary to use an array of multiple LEDs in order to generate enough power to provide thorough curing of the ink. In fact, even with an array of multiple LEDs, inks which are cured by LEDs are prone to poor surface cure owing to the presence of oxygen in the atmosphere adjacent to the ink surface, and the spectral output of LEDs. Compared to conventional mercury lamp UV sources, LEDs have a narrow spectral output. The UV output of LED lamps is essentially monochromatic and most commercial devices operate at 385, 395 or 405 nm. LEDs emit radiation in the UVA region having a long wavelength over a narrow range of wavelengths, which although suitable for depth cure, provides a particular challenge for effective surface cure in normal atmospheric conditions.

Poor surface cure can be reduced in a number of ways. First, it can be overcome by blanketing the irradiated area with an inert gas such as nitrogen during the cure process but this adds considerably to the complexity and cost of the printer. Secondly, it can be overcome by working the LEDs at high power, providing more energy to react with the photoinitiators and oxygen, or the total amount of photoinitiators may be increased, thus allowing more radicals to be generated. However, working the LEDs at high power generates heat, which must be removed and both approaches add to the cost and complexity of the process - regard must be had to limitations on the media range, power consumption, ink viscosity and ink stability. Thirdly, a blend of photoinitiators may be used. However, there are a limited number of blends of photoinitiators that are suitable for food packaging applications.

There is therefore a need in the art for an inkjet ink which is suitable for food packaging, which has a high UV LED cure speed and good surface cure, whilst maintaining a low viscosity.

Accordingly, the present invention provides an inkjet ink comprising: a radiation-curable material; 4% by weight or more in total of one or more polymeric thioxanthone photoinitiators; and 10% by weight or more of 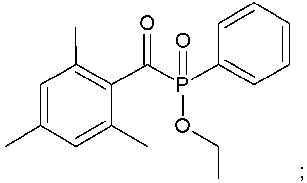 wherein the amounts are based on the total weight of the ink.

The inventors have surprisingly found that the inclusion of the specific blend of photoinitiators in the specific amounts provides an inkjet ink that can be printed onto food packaging and which has a high UV LED cure speed and good surface cure, whilst maintaining a low viscosity.

The inkjet ink of the present invention comprises a radiation-curable material.

The radiation-curable material is not particularly limited and the formulator is free to include any such radiation-curable material in the ink of the present invention to improve the properties or performance of the ink. This radiation-curable material can include any radiation-curable material readily available and known in the art in inkjet inks. By "radiation-curable" is meant a material that polymerises and/or crosslinks upon irradiation, for example, when exposed to actinic radiation, in the presence of a photoinitiator.

The amount of radiation-curable material is not limited other than by the constraints imposed by the use in an inkjet ink, such as viscosity, stability, toxicity etc. In a preferred embodiment, the inkjet ink comprises 20 to 80% by weight of radiation-curable material, based on the total weight of the ink.

In a preferred embodiment, the inkjet ink comprises radiation-curable material that is suitable for printing onto food packaging.

In a preferred embodiment, the inkjet ink comprises a radiation-curable monomer. As is known in the art, monomers may possess different degrees of functionality, which include mono, di, tri and higher functionality monomers.

In a preferred embodiment, the inkjet ink comprises a di- and/or multifunctional radiation-curable monomer.

For the avoidance of doubt, mono and difunctional are intended to have their standard meanings, i.e. one or two groups, respectively, which take part in the polymerisation reaction on curing.

Multifunctional (which does not include difunctional) is intended to have its standard meaning, i.e. three or more groups, respectively, which take part in the polymerisation reaction on curing.

In a preferred embodiment, the radiation-curable monomer is a di-, tri-, tetra-, penta- or hexa-functional monomer, i.e. the radiation curable monomer has two, three, four, five or six functional groups. In a particularly preferred embodiment, the inkjet ink comprises a difunctional monomer. In a particularly preferred embodiment, the inkjet ink comprises at least two di- and/or multifunctional radiation-curable monomers and more preferably, at least two difunctional monomers.

The functional group of the di- and/or multifunctional radiation-curable monomer, which is utilised in the ink of the present invention may be the same or different but must take part in the polymerisation reaction on curing. Examples of such functional groups include any groups that are capable of polymerising upon exposure to radiation and are preferably selected from a (meth)acrylate group and a vinyl ether group.

The di- and/or multifunctional radiation-curable monomer may possess different degrees of functionality, and a mixture including combinations of di, tri and higher functionality monomers may be used.

The substituents of the di- and/or multifunctional radiation-curable monomer are not limited other than by the constraints imposed by the use in an ink-jet ink, such as viscosity, stability, toxicity etc. The substituents are typically alkyl, cycloalkyl, aryl and combinations thereof, any of which may be interrupted by heteroatoms. Non-limiting examples of substituents commonly used in the art include C₁₋₁₈ alkyl, C₃₋₁₈ cycloalkyl, C₆₋₁₀ aryl and combinations thereof, such as C₆₋₁₀ aryl- or C₃₋₁₈ cycloalkyl-substituted C₁₋₁₈ alkyl, any of which may be interrupted by 1-10 heteroatoms, such as oxygen or nitrogen, with nitrogen further substituted by any of the above described substituents. The substituents may together also form a cyclic structure.

In a preferred embodiment, the inkjet ink comprises 5 to 80% by weight of a di- and/or multifunctional radiation-curable monomer, based on the total weight of the ink.

Examples of the di- and/or multifunctional radiation-curable monomer include difunctional (meth)acrylate monomers, multifunctional (meth)acrylate monomers, divinyl ether monomers, multifunctional vinyl ether monomers and di- and/or multifunctional vinyl ether (meth)acrylate monomers. Mixtures of di- and/or multifunctional radiation-curable monomers may also be used.

In a preferred embodiment, the radiation-curable material comprises a (meth)acrylate monomer, more preferably a di- and/or multifunctional (meth)acrylate monomer. In a particularly preferred embodiment, the inkjet ink comprises a difunctional (meth)acrylate monomer.

For the avoidance of doubt, (meth)acrylate is intended herein to have its standard meaning, i.e. acrylate and/or methacrylate.

Difunctional (meth)acrylate monomers are well known in the art and a detailed description is therefore not required. Examples include hexanediol diacrylate (HDDA), 1,8-octanediol diacrylate, 1,9-nonanediol diacrylate, 1,10-decanediol diacrylate (DDDA), 1,11-undecanediol diacrylate and 1,12-dodecanediol diacrylate, polyethylene glycol diacrylate (for example tetraethylene glycol diacrylate, PEG200DA, PEG300DA, PEG400DA, PEG600DA), dipropylene glycol diacrylate (DPGDA), tripropylene glycol diacrylate (TPGDA), tricyclodecane dimethanol diacrylate (TCDDMDA), neopentylglycol diacrylate, 3-methyl-1,5-pentanediol diacrylate (3-MPDA), and the acrylate esters of ethoxylated or propoxylated glycols and polyols, for example, propoxylated neopentylglycol diacrylate (NPGPODA), and mixtures thereof. Also included are esters of methacrylic acid (i.e. methacrylates), such as hexanediol dimethacrylate, 1,8-octanediol dimethacrylate, 1,9-nonanediol dimethacrylate, 1,10-decanediol dimethacrylate, 1,11-undecanediol dimethacrylate and 1,12-dodecanediol dimethacrylate, triethyleneglycol dimethacrylate, diethyleneglycol dimethacrylate, ethyleneglycol dimethacrylate, 1,4-butanediol dimethacrylate and mixtures thereof. 3-MPDDA is particularly preferred.

Preferably, the inkjet ink comprises 5 to 80% by weight, more preferably 25-75% by weight, more preferably 40-75% by weight of a difunctional (meth)acrylate monomer, based on the total weight of the ink.

The inkjet ink may comprise a multifunctional (meth)acrylate monomer.

Suitable multifunctional (meth)acrylate monomers (which do not include difunctional (meth)acrylate monomers) include tri-, tetra-, penta-, hexa-, hepta- and octa-functional monomers. Examples of the multifunctional acrylate monomers that may be included in the inkjet inks include trimethylolpropane triacrylate, dipentaerythritol triacrylate, tri(propylene glycol) triacrylate, bis(pentaerythritol) hexaacrylate, and the acrylate esters of ethoxylated or propoxylated glycols and polyols, for example, ethoxylated trimethylolpropane triacrylate and ethoxylated pentaerythritol tetraacrylate (EOPETTA, also known as PPTTA), and mixtures thereof. Suitable multifunctional (meth)acrylate monomers also include esters of methacrylic acid (i.e. methacrylates), such as trimethylolpropane trimethacrylate. Mixtures of (meth)acrylates may also be used.

The amount of the multifunctional (meth)acrylate monomer, when present, is preferably 5-25% by weight, based on the total weight of the ink.

The di- and/or multifunctional radiation-curable monomer may have at least one vinyl ether functional group.

In a preferred embodiment, the inkjet ink comprises a divinyl ether monomer, a multifunctional vinyl ether monomer, a divinyl ether (meth)acrylate monomer and/or a multifunctional vinyl ether (meth)acrylate monomer. In a particularly preferred embodiment, the inkjet ink comprises a divinyl ether monomer.

Examples of a divinyl ether monomer include triethylene glycol divinyl ether (DVE-3), diethylene glycol divinyl ether, 1,4-cyclohexanedimethanol divinyl ether, bis[4-(vinyloxy)butyl] 1,6-hexanediylbiscarbamate, bis[4-(vinyloxy)butyl] isophthalate, bis[4-(vinyloxy)butyl] (methylenedi-4,1-phenylene)biscarbamate, bis[4-(vinyloxy)butyl] succinate, bis[4-(vinyloxy)butyl]terephthalate, bis[4-(vinyloxymethyl)cyclohexylmethyl] glutarate, 1,4-butanediol divinyl ether and mixtures thereof. Triethylene glycol divinyl ether (DVE-3) is particularly preferred.

An example of a multifunctional vinyl ether monomer is tris[4-(vinyloxy)butyl] trimellitate.

Examples of a vinyl ether (meth)acrylate monomer include 2-(2-vinyloxy ethoxy)ethyl acrylate (VEEA), 2-(2-vinyloxy ethoxy)ethyl methacrylate (VEEM) and mixtures thereof.

In a preferred embodiment, the di- and/or multifunctional radiation-curable monomer is selected from 1,10-decanediol diacrylate (DDDA), hexanediol diacrylate (HDDA), polyethylene glycol diacrylate, tripropylene glycol diacrylate (TPGDA), 3-methyl 1,5- pentanediol diacrylate (3-MPDA), dipropylene glycol diacrylate (DPGDA), tricyclodecane dimethanol diacrylate (TCDDMDA), propoxylated neopentyl glycol diacrylate (NPGPODA), trimethylolpropane triacrylate (TMPTA), di-trimethylolpropane tetraacrylate (DiTMPTA), di-pentaerythritol hexaacrylate (DPHA), ethoxylated trimethylolpropane triacrylate (EOTMPTA), ethoxylated pentaerythritol tetraacrylate (EOPETTA), triethylene glycol divinyl ether (DVE-3) and mixtures thereof.

In a preferred embodiment, the di- and/or multifunctional radiation-curable monomer is preferably selected from 1,10-decanediol diacrylate (DDDA), ethoxylated (5) hexanediol diacrylate (HD(EO)DA), polyethylene glycol (600) diacrylate (PEG600DA), tripropylene glycol diacrylate (TPGDA), 3-methyl 1,5-pentanediol diacrylate (3-MPDA), tricyclodecane dimethanol diacrylate (TCDDMDA), propoxylated neopentyl glycol diacrylate (NPGPODA), di-trimethylolpropane tetraacrylate (DiTMPTA), di-pentaerythritol hexaacrylate (DPHA), ethoxylated trimethylolpropane triacrylate (EOTMPTA), ethoxylated pentaerythritol tetraacrylate (EOPETTA), triethylene glycol divinyl ether (DVE-3) and mixtures thereof. These monomers are particularly suitable for food packaging applications, resulting in reduced odour and migration.

In a preferred embodiment, the difunctional monomer, when present, is selected from 1,10-decanediol diacrylate (DDDA), hexanediol diacrylate (HDDA), polyethylene glycol diacrylate, tripropylene glycol diacrylate (TPGDA), 3-methyl 1,5- pentanediol diacrylate (3-MPDA), dipropylene glycol diacrylate (DPGDA), tricyclodecane dimethanol diacrylate (TCDDMDA), propoxylated neopentyl glycol diacrylate (NPGPODA), triethylene glycol divinyl ether (DVE-3) and mixtures thereof.

The difunctional monomer, when present, is preferably selected from 1,10-decanediol diacrylate (DDDA), ethoxylated (5) hexanediol diacrylate (HD(EO)DA), polyethylene glycol (600) diacrylate (PEG600DA), tripropylene glycol diacrylate (TPGDA), 3-methyl 1,5-pentanediol diacrylate (3-MPDA), tricyclodecane dimethanol diacrylate (TCDDMDA), propoxylated neopentyl glycol diacrylate (NPGPODA), triethylene glycol divinyl ether (DVE-3) and mixtures thereof. These monomers are particularly suitable for food packaging applications, resulting in reduced odour and migration.

Preferably, the difunctional monomer, when present, comprises 3-methyl 1,5-pentanediol diacrylate (3-MPDA).

Monomers typically have a molecular weight of less than 600, preferably more than 200 and less than 450. Monomers are typically added to inkjet inks to reduce the viscosity of the inkjet ink. They therefore preferably have a viscosity of less than 150 mPas at 25°C, more preferably less than 100mPas at 25°C and most preferably less than 20 mPas at 25°C. Monomer viscosities can be measured using an ARG2 rheometer manufactured by T.A. Instruments, which uses a 40 mm oblique / 2° steel cone at 25°C with a shear rate of 25 s⁻¹.

The inkjet ink may further comprise a monofunctional monomer, such as a monofunctional (meth)acrylate monomer.

Monofunctional monomers are well known in the art. A radiation-curable monofunctional monomer has one functional group, which takes part in the polymerisation reaction on curing. The polymerisable groups can be any group that are capable of polymerising upon exposure to radiation and are preferably selected from a (meth)acrylate group and a vinyl ether group.

The substituents of the monofunctional monomer are not limited other than by the constraints imposed by the use in an inkjet ink, such as viscosity, stability, toxicity etc. The substituents are typically alkyl, cycloalkyl, aryl and combinations thereof, any of which may be interrupted by heteroatoms. Non-limiting examples of substituents commonly used in the art include C₁₋₁₈ alkyl, C₃₋₁₈ cycloalkyl, C₆₋₁₀ aryl and combinations thereof, such as C₆₋₁₀ aryl- or C₃₋₁₈ cycloalkyl-substituted C₁₋₁₈ alkyl, any of which may be interrupted by 1-10 heteroatoms, such as oxygen or nitrogen, with nitrogen further substituted by any of the above described substituents. The substituents may together also form a cyclic structure.

The amount of monofunctional monomer, when present, is preferably 1-30% by weight, more preferably 5-25% by weight, based on the total weight of the ink.

The inkjet ink may comprise a monofunctional (meth)acrylate monomer, which are well known in the art and are preferably the esters of acrylic acid. A detailed description is therefore not required. Mixtures of (meth)acrylates may also be used.

The substituents of the monofunctional (meth)acrylate monomer are not limited other than by the constraints imposed by the use in an inkjet ink, such as viscosity, stability, toxicity etc.

The monofunctional (meth)acrylate monomer may be a cyclic monofunctional (meth)acrylate monomer and/or an acyclic-hydrocarbon monofunctional (meth)acrylate monomer.

When present, the monofunctional (meth)acrylate monomer may comprise a cyclic monofunctional (meth)acrylate monomer.

The substituents of the cyclic monofunctional (meth)acrylate monomer are typically cycloalkyl, aryl and combinations thereof, any of which may be interrupted by heteroatoms and/or substituted by alkyl. Non-limiting examples of substituents commonly used in the art include C₃₋₁₈ cycloalkyl, C₆₋₁₀ aryl and combinations thereof, any of which may substituted with alkyl (such as C₁₋₁₈ alkyl) and/or any of which may be interrupted by 1-10 heteroatoms, such as oxygen or nitrogen, with nitrogen further substituted by any of the above described substituents. The substituents may together also form a cyclic structure.

The cyclic monofunctional (meth)acrylate monomer may be selected from isobornyl acrylate (IBOA), phenoxyethyl acrylate (PEA), cyclic TMP formal acrylate (CTFA), tetrahydrofurfuryl acrylate (THFA), (2-methyl-2-ethyl-1,3-dioxolane-4-yl)methyl acrylate (MEDA/Medol-10), 4*-tert-*butylcyclohexyl acrylate (TBCHA), 3,3,5-trimethylcyclohexyl acrylate (TMCHA), benzyl acrylate (BA) and mixtures thereof. Preferably, the cyclic monofunctional (meth)acrylate monomer comprises benzyl acrylate (BA).

When present, the monofunctional (meth)acrylate monomer may comprise an acyclic-hydrocarbon monofunctional (meth)acrylate monomer.

The substituents of the acyclic-hydrocarbon monofunctional (meth)acrylate monomer are typically alkyl, which may be interrupted by heteroatoms. A non-limiting example of a substituent commonly used in the art is C₁₋₁₈ alkyl, which may be interrupted by 1-10 heteroatoms, such as oxygen or nitrogen, with nitrogen further substituted.

The acyclic-hydrocarbon monofunctional (meth)acrylate monomer contains a linear or branched C₆-C₂₀ group. It may be selected from octadecyl acrylate (ODA), 2-(2-ethoxyethoxy)ethyl acrylate, tridecyl acrylate (TDA), isodecyl acrylate (IDA), lauryl acrylate and mixtures thereof. In a preferred embodiment, the acyclic-hydrocarbon monofunctional (meth)acrylate monomer contains a linear C₆-C₂₀ group. Preferably, the acyclic-hydrocarbon monofunctional (meth)acrylate monomer comprises lauryl acrylate.

In a preferred embodiment, when present, the monofunctional (meth)acrylate monomer is selected from isobornyl acrylate (IBOA), phenoxyethyl acrylate (PEA), cyclic TMP formal acrylate (CTFA), tetrahydrofurfuryl acrylate (THFA), (2-methyl-2-ethyl-1,3-dioxolane-4-yl)methyl acrylate (MEDA/Medol-10), 4-*tert*-butylcyclohexyl acrylate (TBCHA), 3,3,5-trimethylcyclohexyl acrylate (TMCHA), benzyl acrylate (BA), octadecyl acrylate (ODA), 2-(2-ethoxyethoxy)ethyl acrylate, tridecyl acrylate (TDA), isodecyl acrylate (IDA), lauryl acrylate and mixtures thereof.

In a particularly preferred embodiment, when present, the monofunctional (meth)acrylate monomer comprises benzyl acrylate (BA), lauryl acrylate and mixtures thereof. Benzyl acrylate and lauryl acrylate are particularly preferred monofunctional (meth)acrylate monomers for indirect food contact applications owing to their high migration limits.

In a preferred embodiment, the inkjet ink comprises a monofunctional (meth)acrylate monomer present in 1-30% by weight, more preferably 5-25% by weight, based on the total weight of the ink.

Tetrahydrofurfuryl acrylate (THFA) is often used to provide good adhesion to variety of substrates, as well as producing a flexible film which is less liable to cracking and delamination. A further advantage of THFA is that it can solubilise chlorinated polyolefins, which in turn provides good adhesion to polyolefin substrates. However, THFA is a hazardous monomer and bears the GHS hazard statement H314 (Causes severe skin burns and eye damage). There is also growing evidence that it may damage fertility or the unborn child. Thus, there is an urgent need in the art to move away from THFA.

The ink will still function in the presence of tetrahydrofurfuryl acrylate (THFA), in terms of its printing and curing properties. However, to avoid the hazardous nature of THFA, the ink preferably contains less than 2% by weight, more preferably less than 1% by weight and most preferably is substantially free of THFA, where the amounts are based on the total weight of the ink.

By substantially free is meant that only small amounts will be present, for example as impurities in the radiation-curable materials present or as a component in a commercially available pigment dispersion. In other words, no THFA is intentionally added to the ink. However, minor amounts of THFA, which may be present as impurities in commercially available inkjet ink components, are tolerated. For example, the ink may comprise less than 0.5% by weight of THFA, more preferably less than 0.1% by weight of THFA, most preferably less than 0.05% by weight of THFA, based on the total weight of the ink. In a preferred embodiment, the inkjet ink is free of THFA.

For food packaging applications, the Swiss Ordinance on Materials and Articles in Contact with Food (SR 817.023.21) sets out provisions for inks. Annex 10 lists permitted substances for the production of food packaging inks. Substances not listed should not be used for food packaging inks. Caution should still be used for some substances on the Swiss Ordinance list and there is some concern about the quality and safety of the monofunctional (meth)acrylate monomers isodecyl acrylate (IDA), octyl acrylate, phenoxyethyl acrylate (PEA) and 2-ethylhexyl acrylate (2-EHA).

The ink preferably contains less than 2% by weight, more preferably less than 1% by weight and most preferably is substantially free of each of IDA, octyl acrylate, PEA and 2-EHA, where the amounts are based on the total weight of the ink. More preferably, the ink contains less than 5% by weight, more preferably less than 2% by weight, more preferably less than 1% by weight and most preferably is substantially free of IDA, octyl acrylate, PEA and 2-EHA in combination, where the amounts are based on the total weight of the ink.

By substantially free is meant that only small amounts will be present, for example as impurities in the radiation-curable materials present or as a component in a commercially available pigment dispersion. In other words, no IDA, octyl acrylate, PEA and 2-EHA is intentionally added to the ink. However, minor amounts of IDA, octyl acrylate, PEA and 2-EHA, which may be present as impurities in commercially available inkjet ink components, are tolerated. For example, the ink may comprise less than 0.5% by weight of each of IDA, octyl acrylate, PEA and 2-EHA, more preferably less than 0.1% by weight of each of IDA, octyl acrylate, PEA and 2-EHA, most preferably less than 0.05% by weight of each of IDA, octyl acrylate, PEA and 2-EHA, based on the total weight of the ink. Preferably, the ink may comprise less than 0.5% by weight of IDA, octyl acrylate, PEA and 2-EHA in combination, more preferably less than 0.1% by weight of IDA, octyl acrylate, PEA and 2-EHA in combination, most preferably less than 0.05% by weight of IDA, octyl acrylate, PEA and 2-EHA in combination, based on the total weight of the ink. In a preferred embodiment, the inkjet ink is free of IDA, octyl acrylate, PEA and 2-EHA.

Preferably, the monofunctional (meth)acrylate monomer is the sole monofunctional monomer present in the ink.

In a preferred embodiment, the radiation-curable material comprises a di- and/or multifunctional radiation-curable monomer and a monofunctional monomer. Preferably, the radiation-curable material consists of a di- and/or multifunctional radiation-curable monomer and a monofunctional monomer.

In a more preferred embodiment, the radiation-curable material comprises a difunctional monomer and a monofunctional monomer. Preferably, the radiation-curable material consists of a difunctional monomer and a monofunctional monomer.

In a most preferred embodiment, the radiation-curable material comprises a difunctional monomer and a monofunctional (meth)acrylate monomer. Preferably, the radiation-curable material consists of a difunctional monomer and a monofunctional (meth)acrylate monomer.

The ink may further include at least one N-vinyl amide monomer and/or N-(meth)acryloyl amine monomer.

N-Vinyl amide monomers are well-known monomers in the art. N-Vinyl amide monomers have a vinyl group attached to the nitrogen atom of an amide which may be further substituted in an analogous manner to the (meth)acrylate monomers. Preferred examples are N-vinyl caprolactam (NVC), N-vinyl pyrrolidone (NVP), N-vinyl piperidone, N-vinyl formamide and N-vinyl acetamide.

Similarly, N-acryloyl amine monomers are also well-known in the art. N-Acryloyl amine monomers also have a vinyl group attached to an amide but via the carbonyl carbon atom and again may be further substituted in an analogous manner to the (meth)acrylate monomers. A preferred example is N-acryloylmorpholine (ACMO).

If present, the inkjet ink preferably comprises at least one of NVC and/or ACMO. N-Vinyl amide monomers are particularly preferred, and most preferably NVC.

The inkjet ink may also comprise one or more N-vinyl monomers other than an N-vinyl amide monomer and/or N-(meth)acryloyl amine monomer. Examples include N-vinyl carbazole, N-vinyl indole and N-vinyl imidazole.

In a preferred embodiment, the amount of monofunctional monomers present in the ink is restricted as monofunctional monomers are more prone to migration and odour issues, which is problematic for food packaging applications. Accordingly, in a preferred embodiment, the ink contains less than 5% by weight, more preferably less than 2% by weight, more preferably less than 1% by weight and most preferably is substantially free of monofunctional monomer, where the amounts are based on the total weight of the ink.

By substantially free is meant that only small amounts will be present, for example as impurities in the radiation-curable materials present or as a component in a commercially available pigment dispersion. In other words, no monofunctional monomer is intentionally added to the ink. However, minor amounts of monofunctional monomer, which may be present as impurities in commercially available inkjet ink components, are tolerated. For example, the ink may comprise less than 0.5% by weight of monofunctional monomer, more preferably less than 0.1% by weight of monofunctional monomer, most preferably less than 0.05% by weight of monofunctional monomer, based on the total weight of the ink. In a preferred embodiment, the inkjet ink is free of monofunctional monomer.

In a preferred embodiment, the inkjet ink of the present invention may further comprise a radiation-curable (i.e. polymerisable) oligomer, such as a (meth)acrylate oligomer. Any radiation-curable oligomer that is compatible with the other ink components is suitable for use in the ink. Preferably, the inkjet ink comprises a (meth)acrylate oligomer.

The term "curable oligomer" has its standard meaning in the art, namely that the component is partially reacted to form a pre-polymer having a plurality of repeating monomer units, which is capable of further polymerisation. The oligomer preferably has a molecular weight of at least 600. The molecular weight is preferably 4,000 or less. Molecular weights (number average) can be calculated if the structure of the oligomer is known or molecular weights can be measured using gel permeation chromatography using polystyrene standards.

The oligomers may possess different degrees of functionality, and a mixture including combinations of mono, di, tri and higher functionality oligomers may be used. The degree of functionality of the oligomer determines the degree of crosslinking and hence the properties of the cured ink. The oligomer is preferably multifunctional meaning that it contains on average more than one reactive functional group per molecule. The average degree of functionality is preferably from 2 to 6.

Oligomers are typically added to inkjet inks to increase the viscosity of the inkjet ink or to provide film-forming properties such as hardness or cure speed. They therefore preferably have a viscosity of 150 mPas or above at 25°C. Preferred oligomers for inclusion in the ink of the invention have a viscosity of 0.5 to 10 Pas at 50°C. Oligomer viscosities can be measured using an ARG2 rheometer manufactured by T.A. Instruments, which uses a 40 mm oblique / 2° steel cone at 60°C with a shear rate of 25 s ⁻¹.

Radiation-curable oligomers comprise a backbone, for example a polyester, urethane, epoxy or polyether backbone, and one or more radiation-curable groups.

The polymerisable group can be any group that is capable of polymerising upon exposure to radiation. Preferably the oligomers are (meth)acrylate oligomers. The oligomer may include amine functionality, as the amine acts as an activator without the drawback of migration associated with low-molecular weight amines. In a preferred embodiment, the radiation-curable oligomer is amine modified. In a particularly preferred embodiment, the radiation-curable oligomer is an amine-modified (meth)acrylate oligomer.

Particularly preferred radiation-curable oligomers are di-, tri-, tetra-, penta- or hexa-functional acrylates.

More preferably, the radiation-curable oligomer is an amine-modified acrylate oligomer. A suitable amine-modified polyester acrylate oligomer is commercially available as UVP6600. A suitable amine-modified polyether acrylate oligomer is commercially available as CN3715LM.

Other suitable examples of radiation-curable oligomers include epoxy based materials such as bisphenol A epoxy acrylates and epoxy novolac acrylates, which have fast cure speeds and provide cured films with good solvent resistance. However, for food packaging applications where quality and safety of the materials is a concern, the ink is preferably substantially free of bisphenol A based materials such as bisphenol A epoxy acrylates. Therefore, the ink is preferably substantially free of bisphenol A epoxy acrylates.

By substantially free is meant that only small amounts will be present, for example as impurities in the radiation-curable materials present or as a component in a commercially available pigment dispersion. In other words, no bisphenol A epoxy acrylates is intentionally added to the ink. However, minor amounts of bisphenol A epoxy acrylates which may be present as impurities in commercially available inkjet ink components, are tolerated. For example, the ink may comprise less than 0.5% by weight of bisphenol A epoxy acrylates, more preferably less than 0.1% by weight of bisphenol A epoxy acrylates, most preferably less than 0.05% by weight of bisphenol A epoxy acrylates, based on the total weight of the ink. In a preferred embodiment, the inkjet ink is free of bisphenol A epoxy acrylates.

The amount of radiation-curable oligomer, when present, is preferably 0.1-10% by weight, based on the total weight of the ink.

The inkjet ink of the present invention comprises 4% by weight or more in total of one or more polymeric thioxanthone photoinitiators; and 10% by weight or more of 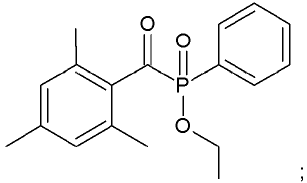 wherein the amounts are based on the total weight of the ink.

The inventors have surprisingly found that the inclusion of the specific blend of photoinitiators in the specific amounts provides an inkjet ink that can be printed onto food packaging, and which has a high UV LED cure speed and good surface cure, whilst maintaining low viscosity. Higher molecular weight photoinitiators reduce migration and odour for food packaging applications. This specific blend of photoinitiators surprisingly allows for efficient UV LED curing resulting in high UV LED cure speed and good surface cure, whilst maintaining low viscosity even at such high concentrations.

The inkjet ink of the present invention comprises 4% by weight or more in total of one or more polymeric thioxanthone photoinitiators, based on the total weight of the ink.

By a polymeric thioxanthone photoinitiator is meant a photoinitiator comprising two or more thioxanthone units connected by a linking unit.

The thioxanthone unit has the structure:

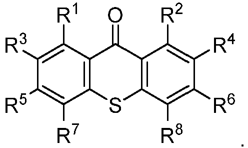

R¹, R², R³, R⁴, R⁵, R⁶, R⁷ and R⁸ are not limited other than by the constraints imposed by the use in an ink-jet ink, such as viscosity, stability, toxicity etc. Preferably however, R¹, R², R³, R⁴, R⁵, R⁶, R⁷ and R⁸ are independently hydrogen, halogen, C₁₋₁₂ alkyl, C₂₋₁₂ alkenyl, C₂₋₁₂ alkynyl, C₇₋₁₂ aralkyl, C₇₋₁₂ alkaryl, C₆₋₁₂ aryl, C₅₋₁₂ heteroaryl or the linking unit, with the proviso that one of R¹, R², R³, R⁴, R⁵, R⁶, R⁷ and R⁸ is the linking unit. More preferably, R² is hydrogen or halogen, R¹, R³, R⁴, R⁵ and R⁷ are hydrogen, and R⁶ and R⁸ are independently hydrogen or the linking unit, with the proviso that one of R⁶ and R⁸ is the linking unit. Most preferably, R² is hydrogen or chlorine, and R¹, R³, R⁴, R⁵ and R⁷ are hydrogen, and R⁶ and R⁸ are independently hydrogen or the linking unit, with the proviso that one of R⁶ and R⁸ is the linking unit.

In a preferred embodiment, R¹, R², R³, R⁴, R⁵, R⁷ and R⁸ are hydrogen and R⁶ is the linking unit.

In another preferred embodiment, R² is chlorine, R¹, R³, R⁴, R⁵, R⁶ and R⁷ are hydrogen and R⁸ is the linking unit.

In a preferred embodiment, the polymeric thioxanthone photoinitiator has three or more thioxanthone units, more preferably four or more thioxanthone units. Preferably, the polymeric thioxanthone photoinitiator has up to six thioxanthone units. Preferably, the polymeric thioxanthone photoinitiator has two to six thioxanthone units, more preferably two to four thioxanthone units.

The two or more thioxanthone units may be the same or different but preferably they are the same.

The linking unit is a polymer. The polymer is not limited other than by the constraints imposed by the use in an ink-jet ink, such as viscosity, stability, toxicity etc.

Preferably, the linking unit has a core based on a polyhydroxy compound. Non-limiting examples of a polyhydroxy compound include ethylene glycol, propylene glycol, butylene glycol, glycerol, trimethylolpropane, di-trimethylolpropane, pentaerythritol and di-pentaerythritol.

Preferably, the core based on a polyhydroxy compound is connected to the two or more thioxanthone units by an ether linkage, more preferably by *OWC=O, wherein * represents the point of attachment to the thioxanthone unit, W is C₁₋₁₂ alkylene or C₂₋₁₂ alkenylene, and the carbonyl carbon is connected to the core based on a polyhydroxy compound.

Preferably, W is C₁₋₁₀ alkylene or C₂₋₁₀ alkenylene, more preferably C₁₋₆ alkylene or C₂₋₆ alkenylene. More preferably, W is (CH)ₘR⁹ wherein m is a value from 1 to 6 and R⁹ is hydrogen, CH₃ or CH₂CH₃. Most preferably, W is CH₂.

An optional repeating monomer unit may be present between the core based on a polyhydroxy compound and the ether linkage, more preferably between the core based on a polyhydroxy compound and *OWC=O as defined above.

The repeating monomer unit is not limited other than by the constraints imposed by the use in an ink-jet ink, such as viscosity, stability, toxicity etc. Non-limiting examples include (OCH₂CH₂)ₙ, (OCH(CH₃)CH₂)ₙ, or (OCH₂CH₂CH₂CH₂)ₙ, wherein n is a value from 1 to 10. For example, the core may be based on pentaerythritol bonded to repeating propylene glycol monomer units via a condensation reaction between the hydroxy groups, which is then connected to the two or more thioxanthone units by an ether linkage, more preferably by *OWC=O as defined above.

Preferably, the linking unit has the structure: 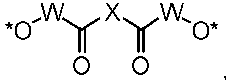 wherein W is C₁₋₁₂ alkylene or C₂₋₁₂ alkenylene; X is (OCH₂CH₂)ₙY, (OCH(CH₃)CH₂)ₙY, or (OCH₂CH₂CH₂CH₂)ₙY, wherein n is a value from 0 to 10 and Y is O, OCH₂CH(OZC=OWO*)CH₂OZ, OCH₂C(CH₂OZC=OWO*)(CH₂CH₃)CH₂OZ, OCH₂C(CH₂OZC=OWO*)(CH₂CH₃)CH₂OCH₂C(CH₂OZC=OWO*)(CH₂CH₃)CH₂OZ, OCH₂C(CH₂OZC=OWO*)₂CH₂OZ or OCH₂C(CH₂ZC=OWO*)₂CH₂OCH₂C(CH₂OZC=OWO*)₂OZ, wherein W is as defined above and Z is (CH₂CH₂O)ₙ, (CH₂CH(CH₃)O)ₙ or (CH₂CH₂CH₂CH₂O)ₙ, wherein n is as defined above; and * represents the point of attachment to the thioxanthone unit.

Preferably, W is C₁₋₁₀ alkylene or C₂₋₁₀ alkenylene, more preferably C₁₋₆ alkylene or C₂₋₆ alkenylene. More preferably, W is (CH)ₘR⁹ wherein m is a value from 1 to 6 and R⁹ is hydrogen, CH₃ or CH₂CH₃. Most preferably, W is CH₂.

In a preferred embodiment, X is (OCH₂CH₂CH₂CH₂)ₙO, wherein n is a value from 0 to 10.

In a particularly preferred embodiment, R¹, R², R³, R⁴, R⁵, R⁷ and R⁸ are hydrogen, R⁶ is the linking unit, W is CH₂ and X is (OCH₂CH₂CH₂CH₂)ₙO, wherein n is a value from 0 to 10.

In another preferred embodiment, X is (OCH(CH₃)CH₂)ₙOCH₂C(CH₂OZC=OWO*)₂CH₂OZ, wherein n is a value from 0 to 10, W and Z are as defined above and * represents the point of attachment to the thioxanthone unit. More preferably, X is (OCH(CH₃)CH₂)ₙOCH₂C(CH₂O(CH₂CH(CH₃)O)ₙC=OCH₂O*)₂CH₂O(CH₂CH(CH₃)O)ₙ, wherein n is a value from 0 to 10 and * represents the point of attachment to the thioxanthone unit. In this embodiment, the total value of n in X is preferably a value from 1 to 20, more preferably from 1 to 15.

In a preferred embodiment, R² is chlorine, R¹, R³, R⁴, R⁵, R⁶ and R⁷ are hydrogen, R⁸ is the linking unit, X is (OCH(CH₃)CH₂)ₙOCH₂C(CH₂OZC=OWO*)₂CH₂OZ, wherein n is a value from 0 to 10, W and Z are as defined above and * represents the point of attachment to the thioxanthone unit. In a particularly preferred embodiment, R² is chlorine, R¹, R³, R⁴, R⁵, R⁶ and R⁷ are hydrogen, R⁸ is the linking unit, W is CH₂ and X is (OCH(CH₃)CH₂)ₙOCH₂C(CH₂O(CH₂CH(CH₃)O)ₙC=OCH₂O*)₂CH₂O(CH₂CH(CH₃)O)ₙ, wherein n is a value from 0 to 10 and * represents the point of attachment to the thioxanthone unit. In this embodiment, the total value of n in X is preferably a value from 1 to 20, more preferably from 1 to 15.

Preferably, the one or more polymeric thioxanthone photoinitiators have a molecular weight of more than 500 g/mol, more preferably more than 600 g/mol and most preferably more than 700 g/mol. Preferably, the one or more polymeric thioxanthone photoinitiators have a molecular weight of less than 2000 g/mol, more preferably less than 1500 g/mol and most preferably less than 1000 g/mol. In a preferred embodiment, the one or more polymeric thioxanthone photoinitiators have a molecular weight of more than 500 g/mol to less than 2000 g/mol, more preferably more than 600 g/mol to less than 2000 g/mol and most preferably more than 700 g/mol to less than 2000 g/mol. Molecular weights (number average) can be calculated if the structure of the photoinitiator is known or molecular weights can be measured using gel permeation chromatography using polystyrene standards.

The inkjet ink of the present invention comprises 4% by weight or more in total of one or more polymeric thioxanthone photoinitiators, based on the total weight of the ink.

In a preferred embodiment, the inkjet ink comprises 5% by weight or more, more preferably 6% by weight or more, in total of one or more polymeric thioxanthone photoinitiators, based on the total weight of the ink. Preferably, the inkjet ink comprises 4 to 12% by weight, preferably 5 to 12% by weight, most preferably 6 to 12% by weight, in total of one or more polymeric thioxanthone photoinitiators, based on the total weight of the ink. More preferably, the inkjet ink comprises 4 to 10% by weight, preferably 5 to 10% by weight, most preferably 6 to 10% by weight, in total of one or more polymeric thioxanthone photoinitiators, based on the total weight of the ink

The inventors have found that the presence of one or more polymeric thioxanthone photoinitiators, in the claimed amount, is required to provide high UV LED cure speed and good surface cure. The inventors found that poor UV LED cure speed and surface cure is provided when a polymeric thioxanthone photoinitiator is absent or when there is a reduced amount of polymeric thioxanthone photoinitiator present. Polymeric thioxanthone photoinitiators are also suitable for food packaging, having a high molecular weight, resulting in reduced migration and odour issues. Further, a low viscosity ink can be achieved, even with the high amount of the claimed photoinitiators present.

The polymeric thioxanthone photoinitiator may be used alone or two or more polymeric thioxanthone photoinitiators may be used together. Examples of suitable polymeric thioxanthone photoinitiators that are commercially available include Speedcure 7010 from Lambson, Omnipol TX from IGM, Genopol TX-2 from Rahn and JRCure 1508 from Jiuri.

Preferably, the one or more polymeric thioxanthone photoinitiators comprise 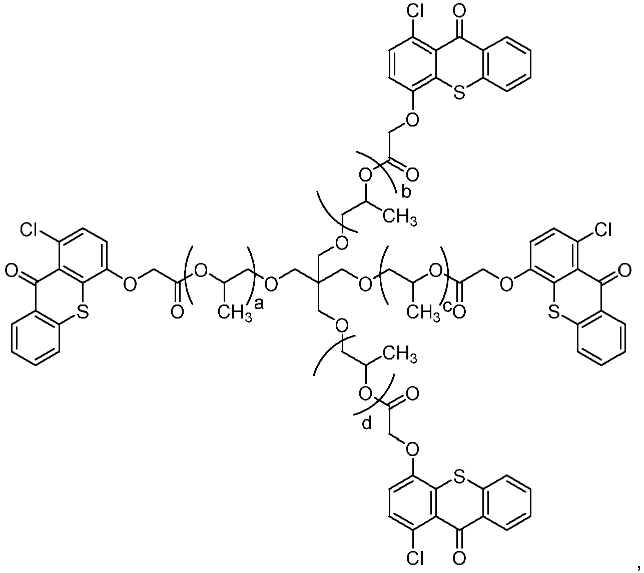
wherein a+b+c+d is a value from 1 to 20,
   and/or 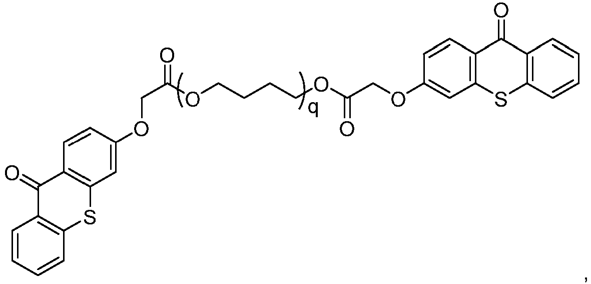
wherein q is a value from 1 to 10.

The photoinitiator 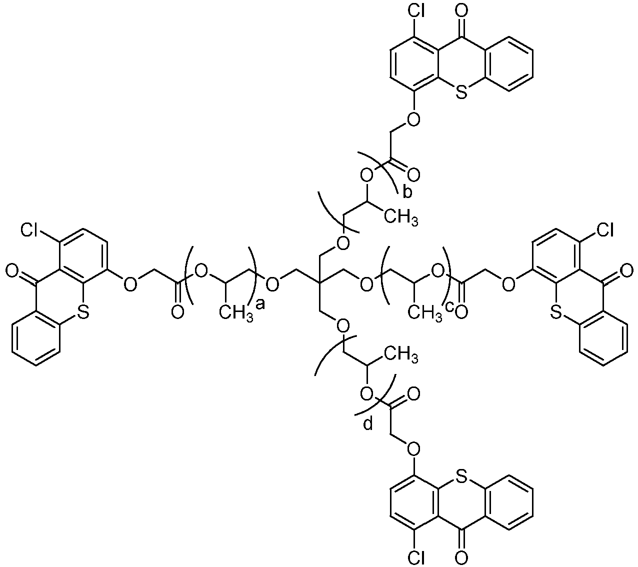 wherein a+b+c+d is a value from 1 to 20, is 1,3-di({α-[1-chloro-9-oxo-9H-thioxanthen-4-yl)oxy]acetylpoly[oxy(1-methylethylene)]} oxy)-2,2-bis({α-[1-chloro-9-oxo-9H-thioxanthen-4-yl)oxy]acetylpoly[oxy(1-methylethylene)]}oxymethyl) propane. This photoinitiator is commercially available as Speedcure 7010 from Lambson. It is also commercially available as Speedcure 7010L from Lambson containing 40% Speedcure 7010 in 60% trimethylolpropane ethoxylate triacrylate.

Speedcure 7010 has the CAS number 1003567-83-6 and trimethylolpropane ethoxylate triacrylate has the CAS number 28961-43-5.

The value of a+b+c+d in the chemical formula of Speedcure 7010 is equal to 1 to 20. In a preferred embodiment, the value of a+b+c+d in the chemical formula of Speedcure 7010 is equal to 1 to 15.

The photoinitiator 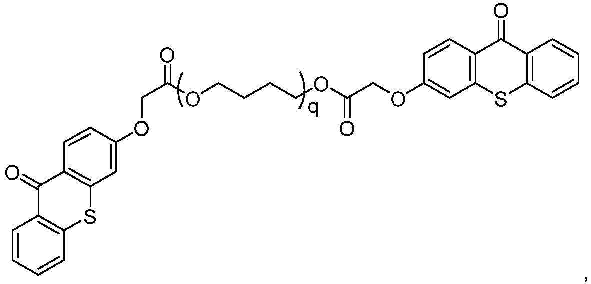 wherein q is a value from 1 to 10, is a photoinitiator having two repeating thioxanthone monomer units. It is commercially available as Omnipol TX from IGM, with a molecular weight of 790 g/mol and with CAS number 813452-37-8. It is also commercially available as Genopol TX-2 from Rahn, with a molecular weight of 980 g/mol.

The inkjet ink of the present invention preferably comprises 4% by weight or more in total of at least one of Speedcure 7010, Omnipol TX and/or Genopol TX-2, based on the total weight of the ink. By this, it is meant that the inkjet ink may comprise: Speedcure 7010; Omnipol TX; Genopol TX-2; Speedcure 7010 and Omnipol TX; Speedcure 7010 and Genopol TX-2; Omnipol TX and Genopol TX-2; or Speedcure 7010, Omnipol TX and Genopol TX-2. And the total amount of at least one of Speedcure 7010, Omnipol TX and/or Genopol TX-2 in the inkjet ink in combination is preferably 4% by weight or more, based on the total weight of the ink.

In a preferred embodiment, the inkjet ink comprises 5% by weight or more, most preferably 6% by weight or more in total of at least one of Speedcure 7010, Omnipol TX and/or Genopol TX-2, based on the total weight of the ink. Preferably, the inkjet ink comprises 4 to 12% by weight, more preferably 5 to 12%, most preferably 6 to 12% by weight in total of at least one of Speedcure 7010, Omnipol TX and/or Genopol TX-2, based on the total weight of the ink. More preferably, the inkjet ink comprises 4 to 10% by weight, more preferably 5 to 10%, most preferably 6 to 10% by weight in total of at least one of Speedcure 7010, Omnipol TX and/or Genopol TX-2, based on the total weight of the ink.

In a preferred embodiment, the inkjet ink comprises 4% by weight or more, more preferably 5% by weight or more, most preferably 6% by weight or more of Speedcure 7010, based on the total weight of the ink. Preferably, the inkjet ink comprises 4 to 12% by weight, more preferably 5 to 12% by weight, most preferably 6 to 12% by weight of Speedcure 7010, based on the total weight of the ink. More preferably, the inkjet ink comprises 4 to 10% by weight, more preferably 5 to 10% by weight, most preferably 6 to 10% by weight of Speedcure 7010, based on the total weight of the ink.

In a preferred embodiment, the inkjet ink comprises 4% by weight or more, more preferably 5% by weight or more, most preferably 6% by weight or more of Omnipol TX, based on the total weight of the ink. Preferably, the inkjet ink comprises 4 to 12% by weight, more preferably 5 to 12% by weight, most preferably 6 to 12% by weight of Omnipol TX, based on the total weight of the ink. More preferably, the inkjet ink comprises 4 to 10% by weight, more preferably 5 to 10% by weight, most preferably 6 to 10% by weight of Omnipol TX, based on the total weight of the ink.

In a preferred embodiment, the inkjet ink comprises 4% by weight or more, more preferably 5% by weight or more, most preferably 6% by weight or more of Genopol TX-2, based on the total weight of the ink. Preferably, the inkjet ink comprises 4 to 12% by weight, more preferably 5 to 12% by weight, most preferably 6 to 12% by weight of Genopol TX-2, based on the total weight of the ink. More preferably, the inkjet ink comprises 4 to 10% by weight, more preferably 5 to 10% by weight, most preferably 6 to 10% by weight of Genopol TX-2, based on the total weight of the ink.

In a preferred embodiment, the inkjet ink comprises 4% by weight or more, more preferably 5% by weight or more, most preferably 6% by weight or more in total of Speedcure 7010 and Omnipol TX, based on the total weight of the ink. Preferably, the inkjet ink comprises 4 to 12% by weight, more preferably 5 to 12% by weight, most preferably 6 to 12% by weight in total of Speedcure 7010 and Omnipol TX, based on the total weight of the ink. More preferably, the inkjet ink comprises 4 to 10% by weight, more preferably 5 to 10% by weight, most preferably 6 to 10% by weight in total of Speedcure 7010 and Omnipol TX, based on the total weight of the ink.

In a preferred embodiment, the inkjet ink comprises 4% by weight or more, more preferably 5% by weight or more, most preferably 6% by weight or more in total of Speedcure 7010 and Genopol TX-2, based on the total weight of the ink. Preferably, the inkjet ink comprises 4 to 12% by weight, more preferably 5 to 12% by weight, most preferably 6 to 12% by weight in total of Speedcure 7010 and Genopol TX-2, based on the total weight of the ink. More preferably, the inkjet ink comprises 4 to 10% by weight, more preferably 5 to 10% by weight, most preferably 6 to 10% by weight in total of Speedcure 7010 and Genopol TX-2, based on the total weight of the ink.

In a preferred embodiment, the inkjet ink comprises 4% by weight or more, more preferably 5% by weight or more, most preferably 6% by weight or more in total of Omnipol TX and Genopol TX-2, based on the total weight of the ink. Preferably, the inkjet ink comprises 4 to 12% by weight, more preferably 5 to 12% by weight, most preferably 6 to 12% by weight in total of Omnipol TX and Genopol TX-2, based on the total weight of the ink. More preferably, the inkjet ink comprises 4 to 10% by weight, more preferably 5 to 10% by weight, most preferably 6 to 10% by weight in total of Omnipol TX and Genopol TX-2, based on the total weight of the ink.

In a preferred embodiment, the inkjet ink comprises 4% by weight or more, more preferably 5% by weight or more, most preferably 6% by weight or more in total of Speedcure 7010, Omnipol TX and Genopol TX-2, based on the total weight of the ink. Preferably, the inkjet ink comprises 4 to 12% by weight, more preferably 5 to 12% by weight, most preferably 6 to 12% by weight in total of Speedcure 7010, Omnipol TX and Genopol TX-2, based on the total weight of the ink. More preferably, the inkjet ink comprises 4 to 10% by weight, more preferably 5 to 10% by weight, most preferably 6 to 10% by weight in total of Speedcure 7010, Omnipol TX and Genopol TX-2, based on the total weight of the ink.

For the avoidance of doubt, when Speedcure 7010L is used, it is the total amount of photoinitiator (Speedcure 7010) that is relevant when assessing the total amount of Speedcure 7010 present in the ink.

The inventors have found that the presence of at least one of Speedcure 7010, Omnipol TX and/or Genopol TX-2 in the ink, in the claimed amount, is particularly beneficial in providing high UV LED cure speed and good surface cure. Speedcure 7010, Omnipol TX and Genopol TX-2 are also suitable for food packaging, having a high molecular weight, resulting in reduced migration and odour issues. Further, a low viscosity ink can be achieved, even with a high amount of at least one of Speedcure 7010, Omnipol TX and/or Genopol TX-2 present.

The inkjet ink of the present invention comprises 10% by weight or more, preferably 10 to 20% by weight, of: 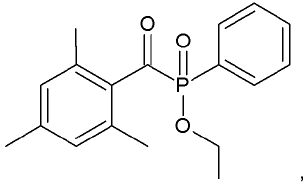 based on the total weight of the ink. This photoinitiator is ethyl (2,4,6-trimethylbenzoyl) phenyl phosphinate and is known as TPO-L. It is commercially available as Speedcure TPO-L from Lambson with CAS number 84434-11-7.

In a preferred embodiment, the ink comprises 10 to 20% by weight of 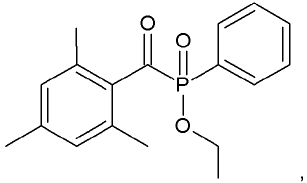 based on the total weight of the ink.

The inventors have found that the presence of TPO-L in the ink, in the claimed amount, is required to provide high UV LED cure speed and good surface cure. The inventors found that poor UV LED cure speed and surface cure is provided when this photoinitiator is absent or when there is a reduced amount of this photoinitiator present. Further, a low viscosity ink can be achieved, even with the high amount of the claimed photoinitiators present.

In another preferred embodiment, the ink comprises one or more additional photoinitiators. By an additional photoinitiator is meant a photoinitiator other than the one or more polymeric thioxanthone photoinitiators and TPO-L. The one or more additional photoinitiators are not particularly limited.

Preferred one or more additional photoinitiators are photoinitiators which produce free radicals on irradiation (free radical photoinitiators) such as, for example, benzophenone, 1-hydroxycyclohexyl phenyl ketone, 2-benzyl-2-dimethylamino-(4-morpholinophenyl)butan-1-one, benzil dimethylketal, phenylbis(2,4,6-trimethylbenzoyl) phosphine oxide, diphenyl(2,4,6-trimethylbenzoyl)phosphine oxide (TPO), 1-[4-(2-hydroxyethoxyl)-phenyl]-2-hydroxy-2-methylpropanone (Omnirad 2959), 2-hydroxy-1-[4-[4-(2-hydroxy-2-methylpropanoyl)phenoxy]phenyl]-2-methylpropan-1-one (KIP160), phenyl bis(2,4,6-trimethylbenzoyl)-phosphine oxide (BAPO), polyethylene glycol di (β-4[4-(2-dimethylamino-2-benzyl)butaonylphenyl] piperazine) propionate (Omnipol 910) or mixtures thereof. Such photoinitiators are known and commercially available such as, for example, under the trade names Omnirad (from IGM) and Esacure (from Lamberti).

Preferably, the ink further comprises two or more additional photoinitiators. In a preferred embodiment, the ink contains up to five photoinitiators.

In a preferred embodiment, the ink comprises 14-50% by weight in total of all photoinitiators, more preferably 14-45% by weight, most preferably 14-35% by weight, based on the total weight of the ink. The present inventors have found that it is possible to achieve a low viscosity inkjet ink, despite such a high amount of photoinitiators being present, through the use of the claimed blend of photoinitiators.

In a preferred embodiment, the inkjet ink preferably contains less than 5% by weight, more preferably less than 2% by weight, more preferably less than 1% by weight, and more preferably is substantially free of any additional photoinitiators. The ink is therefore preferably substantially free of any photoinitiators, other than the one or more polymeric thioxanthone photoinitiators and TPO-L. Put another way, in a preferred embodiment, the one or more polymeric thioxanthone photoinitiators and TPO-L are the only photoinitiators present in the inkjet ink.

By substantially free is meant that only small amounts will be present, for example as impurities in the radiation-curable materials present. In other words, no additional photoinitiator is intentionally added to the ink. However, minor amounts of additional photoinitiator, which may be present as impurities in commercially available inkjet ink components, are tolerated. For example, the ink may comprise less than 0.5% by weight of additional photoinitiator, more preferably less than 0.1% by weight of additional photoinitiator, most preferably less than 0.05% by weight of additional photoinitiator, based on the total weight of the ink. In a preferred embodiment, the inkjet ink is free of additional photoinitiator.

The ink may also contain a resin. The resin preferably has a weight-average molecular weight of 20-200 KDa and preferably 20-60 KDa, as determined by GPC with polystyrene standards. The resin is preferably solid at 25°C. It is preferably soluble in the liquid medium of the ink (the radiation-curable diluent and, when present, additionally the solvent).

The resin is a passive (i.e. inert) resin, in the sense that it is not radiation curable and hence does not undergo cross-linking under the curing conditions to which the ink is subjected.

The resin may improve adhesion of the ink to the substrate. It is preferably soluble in the ink. The resin, when present, is preferably present at 0.1-5% by weight, based on the total weight of the ink.

In a preferred embodiment, the inkjet ink of the present invention also includes a colouring agent, which may be either dissolved or dispersed in the liquid medium of the ink. The colouring agent can be any of a wide range of suitable colouring agents that would be known to the person skilled in the art.

Preferably, the colouring agent is a pigment, of the types known in the art and commercially available such as under the trade-names Paliotol (available from BASF plc), Cinquasia, Irgalite (both available from Ciba Speciality Chemicals) and Hostaperm (available from Clariant UK). The pigment may be of any desired colour such as, for example, Pigment Yellow 13, Pigment Yellow 83, Pigment Red 9, Pigment Red 184, Pigment Blue 15:3, Pigment Green 7, Pigment Violet 19, Pigment Black 7. Especially useful are black and the colours required for trichromatic process printing. Mixtures of pigments may be used.

In one aspect the following pigments are preferred. Cyan: phthalocyanine pigments such as Phthalocyanine blue 15.4. Yellow: azo pigments such as Pigment yellow 120, Pigment yellow 151 and Pigment yellow 155. Magenta: quinacridone pigments, such as Pigment violet 19 or mixed crystal quinacridones such as Cromophtal Jet magenta 2BC and Cinquasia RT-355D. Black: carbon black pigments such as Pigment black 7.

Pigment particles dispersed in the ink should be sufficiently small to allow the ink to pass through an inkjet nozzle, typically having a particle size less than 8 µm, preferably less than 5 µm, more preferably less than 1 µm and particularly preferably less than 0.5 µm.

The colorant is preferably present in an amount of 0.2-20% by weight, preferably 0.5-15% by weight, based on the total weight of the ink. A higher concentration of pigment may be required for white inks, for example up to and including 30% by weight, or 25% by weight, based on the total weight of the ink.

The inkjet ink preferably dries primarily by curing, i.e. by the polymerisation of the monomers present, as discussed hereinabove, and hence is a curable ink. The ink does not, therefore, require the presence of water or a volatile organic solvent to effect drying of the ink. Preferably, the inkjet ink comprises less than 5% by weight of water and volatile organic solvent combined, preferably less than 3% by weight combined, more preferably, less than 2% by weight combined and more preferably less than 1% by weight combined, and most preferably, the inkjet ink is substantially free of water and volatile organic solvents, where the amounts are based on the total weight of the ink.

By substantially free is meant that only small amounts will be present, for example some water will typically be absorbed by the ink from the air and solvents may be present as impurities in the components of the inks, but such low levels are tolerated. In other words, no water or a volatile organic solvent is intentionally added to the ink. However, minor amounts of water or a volatile organic solvent, which may be present as impurities in commercially available inkjet ink components, are tolerated. For example, the ink may comprise less than 0.5% by weight of water or a volatile organic solvent, more preferably less than 0.1% by weight of water or a volatile organic solvent, most preferably less than 0.05% by weight of water or a volatile organic solvent, based on the total weight of the ink. In a preferred embodiment, the inkjet ink is free of water or a volatile organic solvent.

In a preferred embodiment, the inkjet ink comprises a surfactant. The surfactant controls the surface tension of the ink. Surfactants are well known in the art and a detailed description is not required. An example of a suitable surfactant is BYK307. Adjustment of the surface tension of the inks allows control of the surface wetting of the inks on various substrates, for example, plastic substrates. Too high a surface tension can lead to ink pooling and/or a mottled appearance in high coverage areas of the print. Too low a surface tension can lead to excessive ink bleed between different coloured inks. Surface tension is also critical to ensuring stable jetting (nozzle plate wetting and sustainability). The surface tension is preferably in the range of 18-40 mNm⁻¹, more preferably 20-35 mNm⁻¹ and most preferably 20-30 mNm⁻¹.

Other components of types known in the art may be present in the ink of the present invention to improve the properties or performance. These components may be, for example, additional surfactants, defoamers, dispersants, synergists, stabilisers against deterioration by heat or light other than an aerobic stabiliser, reodorants, flow or slip aids, biocides and identifying tracers.

The amounts by weight provided herein are based on the total weight of the ink.

The ink or inkjet ink sets may be prepared by known methods such as stirring with a high-speed water-cooled stirrer, or milling on a horizontal bead-mill.

The ink exhibits a desirable low viscosity, less than 100 mPas, preferably 30 mPas or less, more preferably 22 mPas or less and most preferably 20 mPas or less at 25°C. The ink most preferably has a viscosity of less than 20 mPas at 25°C. Viscosity may be measured using a rotational viscometer fitted with a thermostatically controlled cup and spindle arrangement, running at 20 rpm at 25°C.

The present invention also provides an inkjet ink set, wherein the inkjet ink set of the invention has at least one ink that falls within the scope of the inkjet ink according to the present invention. Preferably, all of the inks in the set fall within the scope of the inkjet ink according to the present invention.

Usually, the inkjet ink set of the present invention is in the form of a multi-chromatic inkjet ink set, which typically comprises a cyan ink, a magenta ink, a yellow ink and a black ink (a so-called trichromatic set). This set is often termed CMYK. The inks in a trichromatic set can be used to produce a wide range of colours and tones.

The present invention also provides a method of inkjet printing comprising inkjet printing the inkjet ink as defined herein onto a substrate and curing the inkjet ink by exposing the inkjet ink to a curing source.

In the method of inkjet printing of the present invention, the inkjet ink is inkjet printed onto a substrate. Printing is performed by inkjet printing, e.g. on a single-pass inkjet printer, for example for printing (directly) onto a substrate, on a roll-to-roll printer or a flat-bed printer. As discussed above, inkjet printing is well known in the art and a detailed description is not required.

The ink is jetted from one or more reservoirs or printing heads through narrow nozzles on to a substrate to form a printed image.

Print heads account for a significant portion of the cost of an entry level printer and it is therefore desirable to keep the number of print heads (and therefore the number of inks in the ink set) low. Reducing the number of print heads can reduce print quality and productivity. It is therefore desirable to balance the number of print heads in order to minimise cost without compromising print quality and productivity.

Substrates include those for packaging applications and in particular, flexible packaging applications. Examples include substrates composed of polyvinyl chloride (PVC), polystyrene, polyester, polyethylene terephthalate (PET), polyethylene terephthalate glycol modified (PETG) and polyolefin (e.g. polyethylene, polypropylene or mixtures or copolymers thereof). Further substrates include all cellulosic materials such as paper and board, or their mixtures/blends with the aforementioned synthetic materials.

Particularly preferred substrates are a food packaging. Food packaging is typically formed of flexible and rigid plastics (e.g. food-grade polystyrene and PE/PP films), paper and board (e.g. corrugated board). Printing onto a food packaging substrate represents a particular challenge on account of the strict safety limitations on the properties of materials which come into contact with food, including indirect additives like packaging inks. For printed food packaging, it is necessary to control and quantify the migration and/or odour of the components of the printed image on the food packaging into the food products. Specific exclusions based on their odour and/or migration properties include volatile organic solvents and many monomers typically used in UV curing inks. Preferably, the monomers present in the ink of the present invention are suitable for food packaging applications.

When discussing the substrate, it is the surface which is most important, since it is the surface which is wetted by the ink. Thus, at least the surface of substrate is composed of the above-discussed material.

In a preferred embodiment, the substrate is a laminate carton material comprising the following layers, in order: an inner polyethylene layer; an aluminium layer; a board layer; and an outer polyethylene layer. By inner is meant a surface of the substrate that would come into contact with food and by outer is meant a surface of the substrate that would come into contact with the inkjet ink used in the method of the present invention. More preferably, the polyethylene layer is corona treated to a surface tension of more than 45 dynes/cm using a Vetaphone unit. This provides improved adhesion of the ink.

The present invention may also provide a printed substrate having the ink as defined herein printed thereon. Preferably, the substrate is a food packaging.

In order to produce a high quality printed image a small jetted drop size is desirable. Preferably the inkjet ink is jetted at drop sizes below 90 picolitres, preferably below 35 picolitres and most preferably below 10 picolitres.

To achieve compatibility with print heads that are capable of jetting drop sizes of 90 picolitres or less, a low viscosity ink is required. A viscosity of 30 mPas or less at 25°C is preferred, more preferably less than 20 mPas at 25°C. For example, 8 to 12 mPas, 18 to 20 mPas, or 24 to 26 mPas. Ink viscosity may be measured using a rotational viscometer fitted with a thermostatically controlled cup and spindle arrangement, running at 20 rpm at 25°C.

The ink of the present invention is cured by any means known in the art, such as exposure to actinic radiation and low-energy electron beam radiation.

It should be noted that the terms "dry" and "cure" are often used interchangeably in the art when referring to radiation-curable inkjet inks to mean the conversion of the inkjet ink from a liquid to solid by polymerisation and/or crosslinking of the radiation-curable material. Herein, however, by "drying" is meant the removal of the water by evaporation and by "curing" is meant the polymerisation and/or crosslinking of the radiation-curable material. Further details of the printing, drying and curing process are provided in WO 2011/021052.

In a preferred embodiment, the ink is cured by exposing the printed ink to a source of actinic radiation.

The source of actinic radiation can be any source of actinic radiation that is suitable for curing radiation-curable inks but is preferably a UV source. Suitable UV sources are well known in the art and a detailed description is not required. These include mercury discharge lamps, fluorescent tubes, light emitting diodes (LEDs), flash lamps and combinations thereof

In a particularly preferred embodiment, the source of actinic radiation is LEDs. The inventors have surprisingly found that the ink of the present invention comprising the specific blend of photoinitiators in the specific amounts allows for increased cure speed and improved surface cure when curing with a UV LED curing source. It is particularly challenging to provide improved surface cure and a high cure speed when curing with a UV LED curing source. This is even more challenging when the formulator's choice of ink components is restricted when providing inkjet inks for food packaging. The present inventors have been able to prepare an inkjet ink that is suitable for food packaging and which also obtains improved surface cure and cure speed, whilst maintaining a low viscosity, by providing an ink having the specific blend of photoinitiators in the amounts as claimed.

LEDs are increasingly used to cure inkjet inks. UV light is emitted from a UV LED light source. UV LED light sources comprise one or more LEDs and are well known in the art. Thus, a detailed description is not required.

It will be understood that UV LED light sources emit radiation having a spread of wavelengths. The emission of UV LED light sources is identified by the wavelength which corresponds to the peak in the wavelength distribution. Compared to conventional mercury lamp UV sources, UV LED light sources emit UV radiation over a narrow range of wavelengths on the wavelength distribution. The width of the range of wavelengths on the wavelength distribution is called a wavelength band. LEDs therefore have a narrow wavelength output when compared to other sources of UV radiation. By a narrow wavelength band, it is meant that at least 90%, preferably at least 95%, of the radiation emitted from the UV LED light source has a wavelength within a wavelength band having a width of 50 nm or less, preferably, 30 nm or less, most preferably 15 nm or less.

In a preferred embodiment, at least 90%, preferably at least 95%, of the radiation emitted from the UV LED light source has a wavelength in a band having a width of 50 nm or less, preferably 30 nm or less, most preferably 15 nm or less.

LEDs have a longer lifetime and exhibit no change in the power/wavelength output overtime. LEDs also have the advantage of switching on instantaneously with no thermal stabilisation time and their use results in minimal heating of the substrate.

The ink may also be cured by exposing the printed ink to low-energy electron beam (ebeam).

The source of low-energy electron beam (ebeam) can be any source of low-energy electron beam that is suitable for curing radiation-curable inks. Suitable low-energy electron beam radiation sources include commercially available ebeam curing units, such as the EB Lab from ebeam Technologies with energy of 80-300 keV and capable of delivering a typical dose of 30-50 kGy at line speeds of up to 30 m/min. By "low-energy" for the ebeam, it is meant that it delivers an electron beam having a dose at the substrate of 100 kGy or less, preferably 70 kGy or less.

Ebeam curing is characterised by dose (energy per unit mass, measured in kilograys (kGy)) deposited in the substrate via electrons. Electron beam surface penetration depends upon the mass, density and thickness of the material being cured. Compared with UV penetration, electrons penetrate deeply through both lower and higher density materials. Unlike UV curing, photoinitiators are not required for ebeam curing to take place.

Ebeam curing is well-known in the art and therefore a detailed explanation of the curing method is not required. In order to cure the printed ink, the ink of the invention is exposed to the ebeam, which produces sufficient energy to instantaneously break chemical bonds and enable polymerisation or crosslinking.

There is no restriction on the ebeam dose that is used to cure the inkjet inks of the present invention other than that the dose is sufficient to fully cure the ink. Preferably, the dose is more than 10 kGy, more preferably more than 20 kGy, more preferably more than 30 kGy and most preferably more than 40 kGy. Preferably, the dose is less than 100 kGy, more preferably less than 90 kGy, more preferably less than 80 kGy and most preferably less than 70 kGy. Preferably, the dose is more than 30 kGy but less than 70 kGy, more preferably more than 30 kGy but less than 60 kGy and most preferably, more than 30 kGy but 50 kGy or less. Doses above 50 kGy may cause damage to the substrate, particularly the substrates used for food packaging applications, and so doses of 50 kGy or less are preferred.

The energy associated with these doses is 80-300 keV, more preferably 70-200 keV and most preferably 100 keV.

The ink cures to form a relatively thin polymerised film. The ink of the present invention typically produces a printed film having a thickness of 1 to 20 µm, preferably 1 to 10 µm, for example 2 to 5 µm. Film thicknesses can be measured using a confocal laser scanning microscope.

The invention will now be described with reference to the following examples, which are not intended to be limiting.

### Examples

### Example 1

Inkjet inks were prepared according to the formulations set out in Table 1. The inkjet ink formulations were prepared by mixing the components in the given amounts. Amounts are given as weight percentages based on the total weight of the ink.

**Table 1**

| **Components** | **Ink A1** | **Ink A2** | **Ink A3** | **Ink A4** | **Ink A5** | **Ink B1** | **Ink B2** | **Ink B3** | **Ink B4** | **Ink B5** | **Ink C1** | **Ink C2** | **Ink C3** |
|---|---|---|---|---|---|---|---|---|---|---|---|---|---|
| **3MPDA (difunctional monomer)** | 92.8 | 87.8 | 82.8 | 77.8 | 72.8 | 87.8 | 82.8 | 77.8 | 72.8 | 67.8 | 82.8 | 77.8 | 72.8 |
| **BHT (stabiliser)** | 0.2 | 0.2 | 0.2 | 0.2 | 0.2 | 0.2 | 0.2 | 0.2 | 0.2 | 0.2 | 0.2 | 0.2 | 0.2 |
| **TPO-L (photoinitiator)** | 0 | 5 | 10 | 15 | 20 | 0 | 5 | 10 | 15 | 20 | 0 | 5 | 10 |
| **Speedcure 7010L (photoinitiator)** | 0 | 0 | 0 | 0 | 0 | 5 | 5 | 5 | 5 | 5 | 10 | 10 | 10 |
| **Omnipol 9210 (photoinitiator)** | 0 | 0 | 0 | 0 | 0 | 0 | 0 | 0 | 0 | 0 | 0 | 0 | 0 |
| **Cyan Pigment Dispersion** | 6 | 6 | 6 | 6 | 6 | 6 | 6 | 6 | 6 | 6 | 6 | 6 | 6 |
| **Byk307 (surfactant)** | 1 | 1 | 1 | 1 | 1 | 1 | 1 | 1 | 1 | 1 | 1 | 1 | 1 |

**Table 1 (continued).**

| **Components** | **Ink C4** | **Ink C5** | **Ink D1** | **Ink D2** | **Ink D3** | **Ink D4** | **Ink D5** | **Ink E1** | **Ink E2** | **Ink E3** | **Ink E4** | **Ink E5** | **Ink F** |
|---|---|---|---|---|---|---|---|---|---|---|---|---|---|
| **3MPDA (difunctional monomer)** | 67.8 | 62.8 | 77.8 | 72.8 | 67.8 | 62.8 | 57.8 | 72.8 | 67.8 | 62.8 | 57.8 | 52.8 | 60.8 |
| **BHT (stabiliser)** | 0.2 | 0.2 | 0.2 | 0.2 | 0.2 | 0.2 | 0.2 | 0.2 | 0.2 | 0.2 | 0.2 | 0.2 | 0.2 |
| **TPO-L (photoinitiator)** | 15 | 20 | 0 | 5 | 10 | 15 | 20 | 0 | 5 | 10 | 15 | 20 | 20 |
| **Speedcure 7010L (photoinitiator)** | 10 | 10 | 15 | 15 | 15 | 15 | 15 | 20 | 20 | 20 | 20 | 20 | 0 |
| **Omnipol 9210 (photoinitiator)** | 0 | 0 | 0 | 0 | 0 | 0 | 0 | 0 | 0 | 0 | 0 | 0 | 12 |
| **Cyan Pigment Dispersion** | 6 | 6 | 6 | 6 | 6 | 6 | 6 | 6 | 6 | 6 | 6 | 6 | 6 |
| **Byk307 (surfactant)** | 1 | 1 | 1 | 1 | 1 | 1 | 1 | 1 | 1 | 1 | 1 | 1 | 1 |

The cyan pigment dispersion contains 30% blue pigment, 20% polymeric dispersing aid and 50% DVE-3. The dispersion was prepared by mixing the components in the given amounts and passing the mixture through a bead mill until the dispersion had a particle size of less than 0.3 microns. Amounts are given as weight percentages based on the total weight of the dispersion.

Omnipol 9210 contains 80% Omnipol 910 from IGM with the CAS number 886463-10-1 in 20% pentaerythritol [5 EO] tetraacrylate (PPTTA).

Inks A-E of Table 1 have varying amounts of TPO-L and Speedcure 7010L, which are set out in Table 2. Speedcure 7010L contains 40% Speedcure 7010 in 60% trimethylolpropane ethoxylate triacrylate and so the amount of the active ingredient (Speedcure 7010) is also specified in Table 2.

**Table 2**

| **Ink formulations** | | | | **TPO-L wt%** | | | | |
|---|---|---|---|---|---|---|---|---|
| | | | | **0** | **5** | **10** | **15** | **20** |
| **Speedcure 7010L wt%** | **0** | **Speedcure 7010 wt%** | **0** | A1 | A2 | A3 | A4 | A5 |
| | **5** | | **2** | B1 | B2 | B3 | B4 | B5 |
| | **10** | | **4** | C1 | C2 | C3 | C4 | C5 |
| | **15** | | **6** | D1 | D2 | D3 | D4 | D5 |
| | **20** | | **8** | E1 | E2 | E3 | E4 | E5 |

Inks C3-C5, D3-D5 and E3-E5 are examples of the invention as they have the claimed photoinitiators in the claimed amounts.

Inks A1-A5, B1-B5. C1-C2, D1-D2 and E1-E2 are comparative examples as they do not comprise or do not have the required amount of the claimed photoinitiators.

Ink F is a comparative example as Speedcure 7010L has been replaced by Omnipol 9210.

### Surface cure at varying cure speed

The surface cure at varying cure speeds for the inks of Table 1 was then assessed.

In order to assess the surface cure at varying cure speeds, the inks were drawn down in a 12 µm film using a 12 µm wire wound K-bar onto a PP60 Top White substrate available from Avery Demnison.

The 12 µm drawdowns were then passed under a 16 W, 40 mm LED lamp (16W 395 nm LED, Phoseon FireLine FL440 225 x 40 mm) at varying belt speeds to provide a cured ink film.

The cured ink film had a piece of Epson photo paper placed face down on the cured ink film. The back of the photo paper was rubbed by hand in both direction 10 times. The photo paper was then pulled away from the cured ink film.

If the film is cured and has good surface cure, the photo paper will separate with no offset and no noise. If the film is not fully cured and has poor surface cure, the ink will offset to the photo paper and/or noise is observed as force is required to separate the partially cured ink film and the photo paper.

The cure was assessed at increasing belt speeds and the cure speed (the maximum belt speed at which a pass for cure can be achieved) was recorded for each ink.

The cure results for the inks of Table 2 are shown in Table 3.

**Table 3**

| **Cure Speed / m/min** | | | | **TPO-L wt%** | | | | |
|---|---|---|---|---|---|---|---|---|
| | | | | **0** | **5** | **10** | **15** | **20** |
| **Speedcure 7010L wt%** | **0** | **Speedcure 7010 wt%** | **0** | 0 | 0 | 0 | 0 | 0 |
| | **5** | | **2** | 0 | 0 | 0 | 0 | 0 |
| | **10** | | **4** | 0 | 0 | 30 | 160 | 160 |
| | **15** | | **6** | 0 | 0 | 30 | 160 | 200 |
| | **20** | | **8** | 0 | 0 | 70 | 200 | 280 |

As can be seen from the cure speed results, improved surface cure and cure speed is achieved when Speedcure 7010L and TPO-L are used in combination in the claimed amounts.

Adequate surface cure and cure speed is not achieved in the absence of Speedcure 7010L or TPO-L, see inks A1-A5, and A1, B1, C1, D1 and E1, respectively, even at high concentrations.

Adequate surface cure and cure speed is also not achieved when the inkjet ink has less than 4 wt% of Speedcure 7010, see inks B2-B5. Further, adequate surface cure and cure speed is not achieved when the inkjet ink has less than 10 wt% of TPO-L, see inks B2, C2, D2 and E2.

The inventors have surprisingly found that the inkjet ink comprising the claimed blend of photoinitators in the claimed amount provides improved surface cure and cure speed, even when curing with UV LEDs.

Ink F was also assessed for cure and the cure speed (the maximum belt speed at which a pass for cure can be achieved) was also recorded as 0 m/min. This shows that the replacement of Speedcure 7010L with an alternative photoinitiator, namely Omnipol 9210 does not achieve the required cure speed and surface cure.

### Viscosity

The viscosity of the inks of Table 1 was measured using a Brookfield viscometer running at 30 rpm at 25°C.

The viscosity results for the inks of Table 2 are shown in Table 4.

**Table 4.**

| **Viscosity / mPa.s** | | | | **TPO-L wt%** | | | | |
|---|---|---|---|---|---|---|---|---|
| | | | | **0** | **5** | **10** | **15** | **20** |
| **Speedcure 7010L wt%** | **0** | **Speedcure 7010 wt%** | **0** | 6.4 | 7.1 | 7.8 | 8.7 | 9.5 |
| | **5** | | **2** | 7.4 | 8.1 | 9.1 | 10.3 | 11.6 |
| | **10** | | **4** | 8.6 | 9.6 | 10.8 | 12.2 | 14.1 |
| | **15** | | **6** | 10.2 | 11.5 | 13.0 | 15.0 | 17.1 |
| | **20** | | **8** | 12.2 | 13.9 | 15.9 | 18.3 | 21.2 |

The viscosity of comparative ink F was 20.6 mPa.s. As can be seen from the viscosity results, the inks of Table 1 all surprisingly have a low viscosity, despite the high amount of photoinitiators present in the inks.

## Claims

1. An inkjet ink comprising: a radiation-curable material; 4% by weight or more in total of one or more polymeric thioxanthone photoinitiators; and 10% by weight or more of 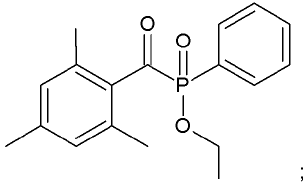 wherein the amounts are based on the total weight of the ink.

2. An inkjet ink as claimed in claim 1, wherein the one or more polymeric thioxanthone photoinitiators comprise two or more thioxanthone units connected by a linking unit, wherein the thioxanthone unit has the structure: 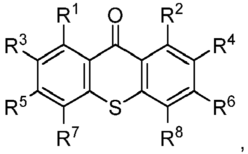 wherein R¹, R², R³, R⁴, R⁵, R⁶, R⁷ and R⁸ are independently hydrogen, halogen, C₁₋₁₂ alkyl, C₂₋₁₂ alkenyl, C₂₋₁₂ alkynyl, C₇₋₁₂ aralkyl, C₇₋₁₂ alkaryl, C₆₋₁₂ aryl, C₅₋₁₂ heteroaryl or the linking unit, with the proviso that one of R¹, R², R³, R⁴, R⁵, R⁶, R⁷ and R⁸ is the linking unit; and the linking unit is a polymer.

3. An inkjet ink as claimed in claim 2, wherein the one or more polymeric thioxanthone photoinitiators comprise 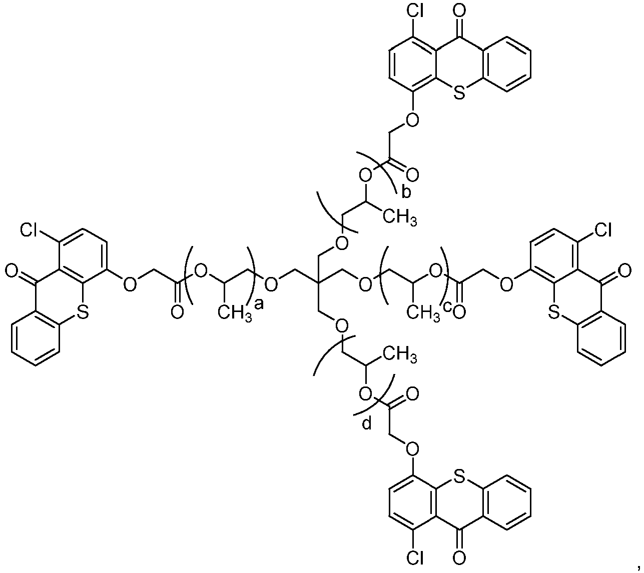
wherein a+b+c+d is a value from 1 to 20,
and/or 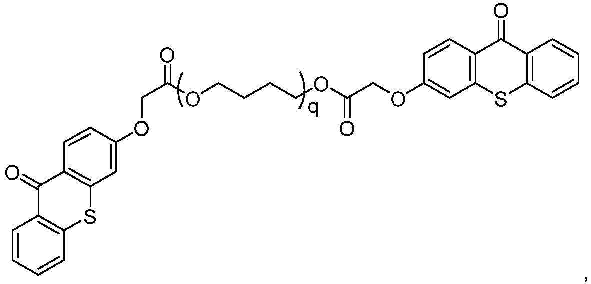
wherein q is a value from 1 to 10.

4. An inkjet ink as claimed in any preceding claim, wherein the inkjet ink comprises 5% by weight or more in total of the one or more polymeric thioxanthone photoinitiators, based on the total weight of the ink.

5. An inkjet ink as claimed in claim 4, wherein the inkjet ink comprises 5 to 12% by weight in total of the one or more polymeric thioxanthone photoinitiators, based on the total weight of the ink.

6. An inkjet ink as claimed in any preceding claim, wherein the inkjet ink comprises 10 to 20% by weight of 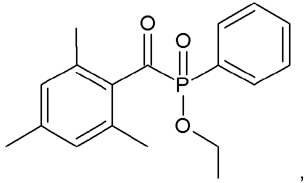 based on the total weight of the ink.

7. An inkjet ink as claimed in any preceding claim, wherein the inkjet ink comprises 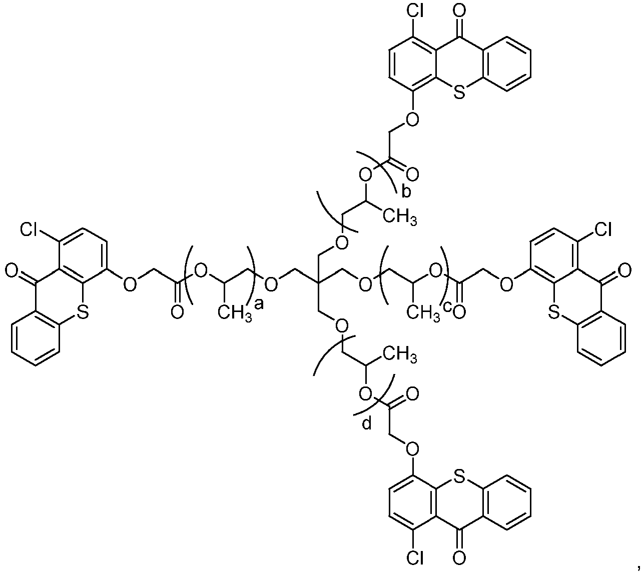 wherein a+b+c+d is a value from 1 to 20.

8. An inkjet ink as claimed in any preceding claim, wherein the ink comprises 14-35% by weight in total of all photoinitiators.

9. An inkjet ink as claimed in any preceding claim, wherein the ink has a viscosity of less than 30 mPas at 25°C.

10. An inkjet ink as claimed in any preceding claim, wherein the radiation-curable material comprises a radiation-curable monomer.

11. An inkjet ink as claimed in claim 10, wherein the radiation-curable monomer comprises a di and/or multifunctional radiation-curable monomer, preferably a difunctional monomer.

12. A method of inkjet printing comprising inkjet printing the inkjet ink as claimed in any preceding claim onto a substrate and curing the inkjet ink by exposing the inkjet ink to a curing source.

13. A method of inkjet printing as claimed in claim 12, wherein the curing source is a UV LED light.

14. A method of inkjet printing as claimed in claims 12 or 13, wherein the substrate is food packaging.

15. A substrate having the inkjet ink as claimed in claims 1 to 11 printed thereon, preferably wherein the substrate is food packaging.

## Patentansprüche

1. Tintenstrahltinte, umfassend: ein strahlungshärtbares Material; insgesamt 4 Gew.-% oder mehr von einem oder mehreren polymeren Thioxanthon-Photoinitiatoren; und 10 Gew.-% oder mehr von 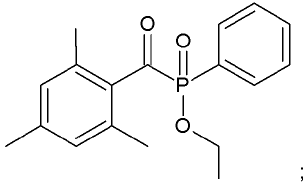 wobei die Mengen auf dem Gesamtgewicht der Tinte basieren.

2. Tintenstrahltinte nach Anspruch 1, wobei der eine oder die mehreren polymeren Thioxanthon-Photoinitiatoren zwei oder mehrere Thioxanthon-Einheiten umfassen, die durch eine Verknüpfungseinheit verbunden sind, wobei die Thioxanthon-Einheit die folgende Struktur aufweist: 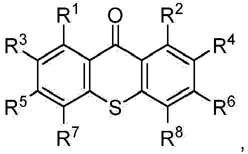 wobei R¹, R², R³, R⁴, R⁵, R⁶ R⁷ und R⁸ unabhängig Wasserstoff, Halogen, C₁₋₁₂-Alkyl, C₂₋₁₂-Alkenyl, C₂₋₁₂-Alkinyl, C₇₋₁₂-Aralkyl, C₇₋₁₂-Alkaryl, C₆₋₁₂-Aryl, C₅₋₁₂-Heteroaryl oder die Verknüpfungseinheit sind, mit der Maßgabe, dass eines von R¹, R², R³, R⁴, R⁵, R⁶, R⁷ und R⁸ die Verknüpfungseinheit ist; und die Verknüpfungseinheit ein Polymer ist.

3. Tintenstrahltinte nach Anspruch 2, wobei der eine oder die mehreren polymeren Thioxanthon-Photoinitiatoren Folgendes umfassen: 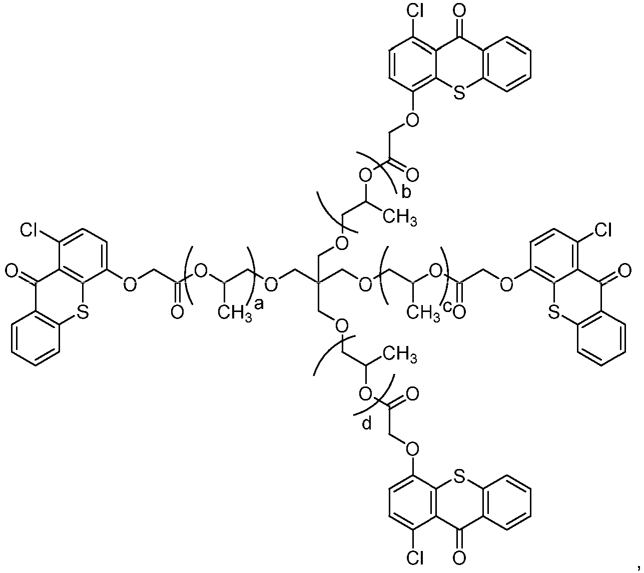
wobei a+b+c+d ein Wert von 1 bis 20 ist,
und/oder 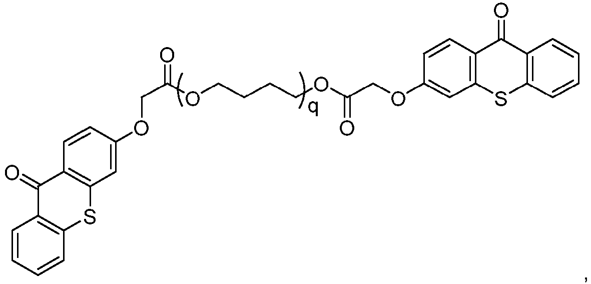
wobei q ein Wert von 1 bis 10 ist.

4. Tintenstrahltinte nach einem vorhergehenden Anspruch, wobei die Tintenstrahltinte insgesamt 5 Gew.-% oder mehr von dem einen oder den mehreren polymeren Thioxanthon-Photoinitiatoren umfasst, basierend auf dem Gesamtgewicht der Tinte.

5. Tintenstrahltinte nach Anspruch 4, wobei die Tintenstrahltinte insgesamt 5 bis 12 Gew.-% von dem einen oder den mehreren polymeren Thioxanthon-Photoinitiatoren umfasst, basierend auf dem Gesamtgewicht der Tinte.

6. Tintenstrahltinte nach einem vorhergehenden Anspruch, wobei die Tintenstrahltinte 10 bis 20 Gew.-% 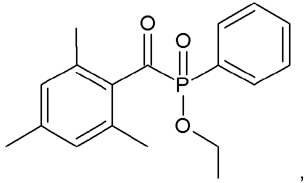 umfasst, basierend auf dem Gesamtgewicht der Tinte.

7. Tintenstrahltinte nach einem vorhergehenden Anspruch, wobei die Tintenstrahltinte 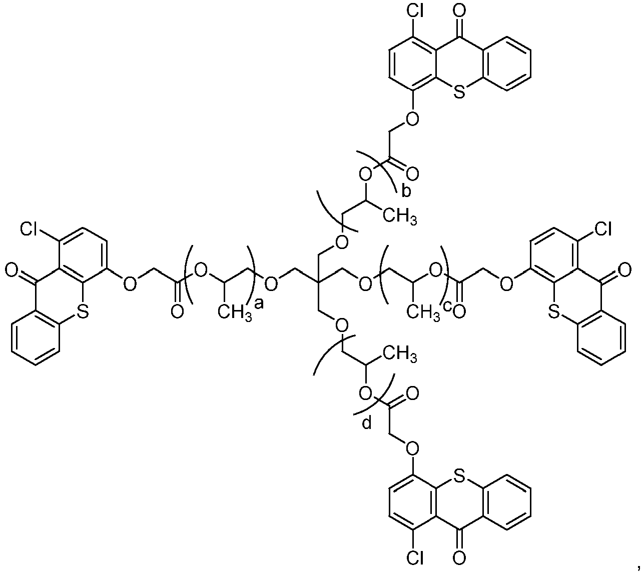 umfasst, wobei a+b+c+d ein Wert von 1 bis 20 ist.

8. Tintenstrahltinte nach einem vorhergehenden Anspruch, wobei die Tinte insgesamt 14-35 Gew.-% von allen Photoinitiatoren umfasst.

9. Tintenstrahltinte nach einem vorhergehenden Anspruch, wobei die Tinte eine Viskosität von weniger als 30 mPas bei 25 °C aufweist.

10. Tintenstrahltinte nach einem vorhergehenden Anspruch, wobei das strahlungshärtbare Material ein strahlungshärtbares Monomer umfasst.

11. Tintenstrahltinte nach Anspruch 10, wobei das strahlungshärtbare Monomer ein di- und/oder multifunktionales strahlungshärtbares Monomer, bevorzugt ein difunktionales Monomer umfasst.

12. Verfahren zum Tintenstrahldrucken, umfassend Tintenstrahldrucken der Tintenstrahltinte nach einem vorhergehenden Anspruch auf ein Substrat und Härten der Tintenstrahltinte durch Aussetzen der Tintenstrahltinte einer Härtungsquelle.

13. Verfahren zum Tintenstrahldrucken nach Anspruch 12, wobei die Härtungsquelle ein UV-LED-Licht ist.

14. Verfahren zum Tintenstrahldrucken nach Anspruch 12 oder 13, wobei das Substrat Lebensmittelverpackung ist.

15. Substrat, auf das die Tintenstrahltinte nach Anspruch 1 bis 11 aufgedruckt ist, wobei bevorzugt das Substrat Lebensmittelverpackung ist.

## Revendications

1. Encre pour jet d'encre comprenant : un matériau durcissable par rayonnement ; 4 % en poids ou plus au total d'un ou de plusieurs photoinitiateurs polymères de thioxanthone ; et 10 % en poids ou plus de 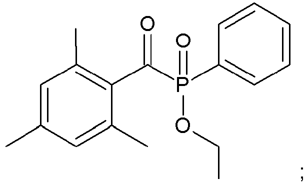 dans laquelle les quantités sont basées sur le poids total de l'encre.

2. Encre pour jet d'encre selon la revendication 1, dans laquelle les un ou plusieurs photoinitiateurs polymères de thioxanthone comprennent deux unités de thioxanthone ou plus connectées par une unité de liaison, dans laquelle l'unité de thioxanthone comporte la structure : 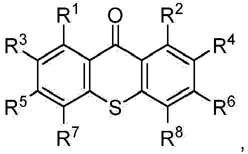 dans laquelle R¹, R², R³, R⁴, R⁵, R⁶, R⁷ et R⁸ sont indépendamment de l'hydrogène, un halogène, un alkyle en C₁₋₁₂, un alcényle en C₂₋₁₂, un alcynyle en C₂₋₁₂, un aralkyle en C₇₋₁₂, un alcaryle en C₇₋₁₂, un aryle en C₆₋₁₂, un hétéroaryle en C₅₋₁₂ ou l'unité de liaison, à condition que l'un de R¹, R², R³, R⁴, R⁵, R⁶, R⁷ et R⁸ soit l'unité de liaison ; et l'unité de liaison est un polymère.

3. Encre pour jet d'encre selon la revendication 2, dans laquelle les un ou plusieurs photoinitiateurs polymères de thioxanthone comprennent 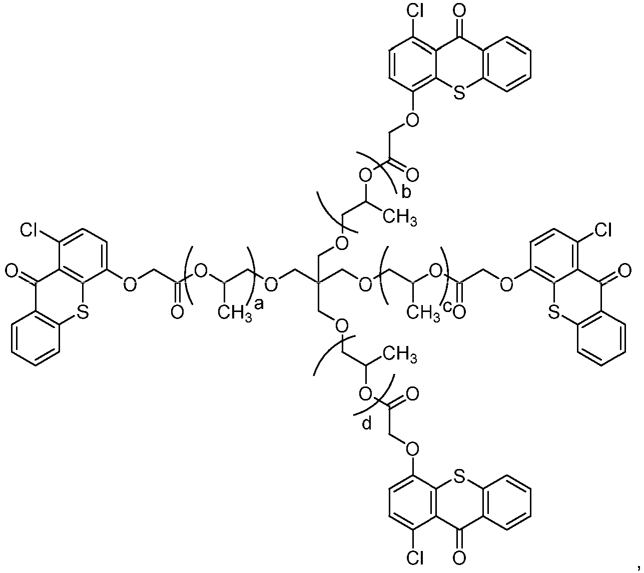
dans laquelle a+b+c+d est une valeur de 1 à 20,
et/ou 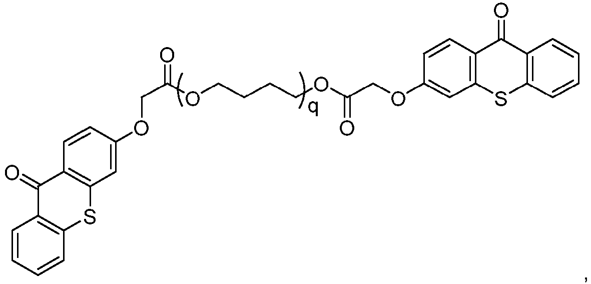
dans laquelle q est une valeur de 1 à 10.

4. Encre pour jet d'encre selon une quelconque revendication précédente, dans laquelle l'encre pour jet d'encre comprend 5 % en poids ou plus au total des un ou plusieurs photoinitiateurs polymères de thioxanthone, sur la base du poids total de l'encre.

5. Encre pour jet d'encre selon la revendication 4, dans laquelle l'encre pour jet d'encre comprend 5 à 12 % en poids au total des un ou plusieurs photoinitiateurs polymères de thioxanthone, sur la base du poids total de l'encre.

6. Encre pour jet d'encre selon une quelconque revendication précédente, dans laquelle l'encre pour jet d'encre comprend 10 à 20 % en poids de 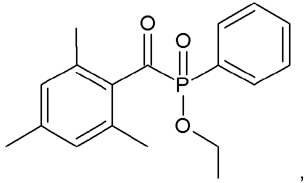 sur la base du poids total de l'encre.

7. Encre pour jet d'encre selon une quelconque revendication précédente, dans laquelle l'encre comprend 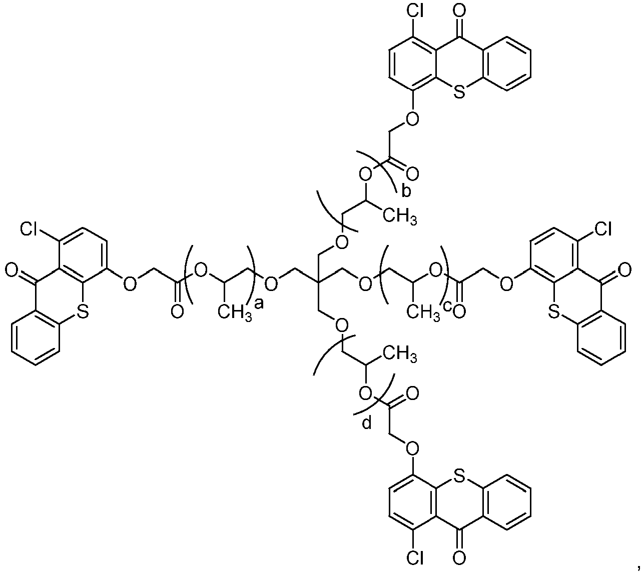 dans laquelle a+b+c+d est une valeur de 1 à 20.

8. Encre pour jet d'encre selon une quelconque revendication précédente, dans laquelle l'encre comprend 14 à 35 % en poids au total de tous les photoinitiateurs.

9. Encre pour jet d'encre selon une quelconque revendication précédente, dans laquelle l'encre comporte une viscosité inférieure à 30 mPas à 25 °C.

10. Encre pour jet d'encre selon une quelconque revendication précédente, dans laquelle le matériau durcissable par rayonnement comprend un monomère durcissable par rayonnement.

11. Encre pour jet d'encre selon la revendication 10, dans laquelle le monomère durcissable par rayonnement comprend un monomère durcissable par rayonnement di et/ou multifonctionnel, de préférence un monomère difonctionnel.

12. Procédé d'impression par jet d'encre comprenant l'impression par jet d'encre de l'encre pour jet d'encre selon une quelconque revendication précédente sur un substrat et le durcissement de l'encre pour jet d'encre en exposant l'encre pour jet d'encre à une source de durcissement.

13. Procédé d'impression par jet d'encre selon la revendication 12, dans lequel la source de durcissement est une lumière à LED UV.

14. Procédé d'impression par jet d'encre selon la revendication 12 ou 13, dans lequel le substrat est un emballage alimentaire.

15. Substrat sur lequel est imprimée l'encre pour jet d'encre selon les revendications 1 à 11, de préférence dans lequel le substrat est un emballage alimentaire.
